# EUROPÄISCHE PATENTSCHRIFT

(11) **EP 0 565 907 B1**
(45) Veröffentlichungstag und Bekanntmachung des Hinweises auf die Patenterteilung: **12.02.1997**
(21) Anmeldenummer: 93104639.5
(22) Anmeldetag: 22.03.1993
(51) Int. Cl.: B23B 27/00, B23B 29/02

(54) **Werkzeug mit austauschbaren Schneidkörpern für die spanabhebende Formgebung vornehmlich in der Metallbearbeitung**
Tool with exchangeable cutting tip for shaping by chipforming essentially in metal working
Outil avec plaquette de coupe interchangeable pour le formage par enlèvement de copeau essentiellement pour le travail des métaux

(30) Priorität: 16.04.1992 DE 4212709
(43) Veröffentlichungstag der Anmeldung: 20.10.1993
(73) Patentinhaber: Esslinger, Hans, D-73054 Eislingen (DE)
(72) Erfinder: Esslinger, Hans, D-73054 Eislingen (DE)
(74) Vertreter: Seemann, Norbert W., Dipl.-Ing.

(56) Entgegenhaltungen:
- EP-A- 0 138 336
- DE-U- 8 407 867
- DE-U- 9 002 974
- FR-A- 1 533 363
- FR-A- 2 209 629
- FR-A- 2 355 600
- US-A- 3 735 461
- US-A- 4 579 488

## Beschreibung

Die vorliegende Erfindung bezieht sich auf ein Werkzeug nach dem Oberbegriff des Patentanspruchs 1, wie aus der FR-A-1 533 363 bekannt. Ein solches Werkzeug wird beispielsweise als Einstechwerkzeug zum Einbringen von Einstichen in insbesondere kleine Bohrungen bzw. andere rotationssymmetrische Mantelflächen verwendet.

Zum Einstechen in kleine Bohrungen werden bislang üblicherweise Werkzeuge in Form von auskragenden Stäben eingesetzt, an deren vorderem Ende sich eine Scheibe befindet, aus der sich die notwendigen Profile herausarbeiten lassen.

Für verschiedenartige Einstiche sind somit auch unterschiedliche Werkzeuge notwendig, deren Herstellung zeit- und kostenintensiv ist. Zudem wird das gesamte Werkzeug unbrauchbar, falls die Schneide bricht oder stark beschädigt wird.

Darüber hinaus ist aus der FR-A-1 533 363 ein Werkzeug mit austauschbaren Schneidkörpern bekannt, das aus einem Grundhalter besteht, in dem sich mindestens eine Aufnahmebohrung samt Befestigungselement für den auswechselbaren Schneidkörper befindet, wobei als Befestigungselement eine Klemmschraube dient, die den jeweils aufgenommenen Schneidkörper durch Klemmung fixiert. Nachteilig an diesem Werkzeug ist jedoch, daß der Schneidkörper zuerst in eine zusätzliche Spannhülse eingeschoben und dann mitsamt letzterer im Grundhalter aufgenommen wird. Weiterhin ist es von Nachteil, daß die besagte Klemmschraube nur eine quer auf den Schneidkörperschaft wirkende Spannkraft erzeugt. Während der Anzugsbewegung der Klemmschraube muß nun noch der Schneidkörperschaft, zusätzlich durch den Bediener, durch axialen Druck an den im Grundhalter befindlichen stellbaren Anschlag angelegt werden.

Der Erfindung liegt daher die Aufgabe zugrunde, für die vielfältigen Bearbeitungsvorgänge, speziell im kleineren Durchmesserbereich, ein Werkzeug mit in einfacher Weise auswechselbaren Schneidkörpern zu schaffen.

Gelöst wird diese Aufgabe durch die im Patentanspruch 1 angegebenen baulichen Merkmale; die Unteransprüche beinhalten weitere vorteilhafte Ausgestaltungsmerkmale und Weiterbildungen der neuen technischen Lehre, die zudem anhand eines zeichnerischen Ausführungsbeispiels im folgenden vom Detail her noch näher erläutert ist.

Die Zeichnungen zeigen dabei in
- Fig. 1: das neuartige Werkzeug in teilweise geschnittener Draufsicht,
- Fig. 2: einen zweischneidigen Schneideinsatz in Seitenansicht,

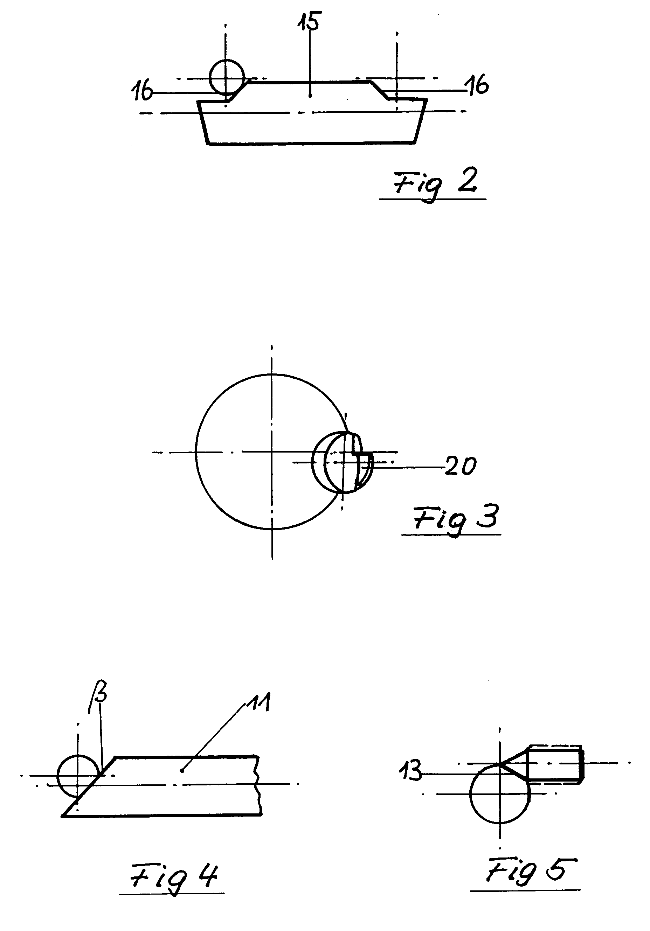

- Fig. 3: einen Schneideinsatz für axiales Stechen als Vorderansicht,
- Fig. 4: die Fixierschräge des Grundhalters aus Fig. 1 in Richtung "x" gesehen und
- Fig. 5: die Klemmschraube aus Fig. 1 in Richtung "y" gesehen.

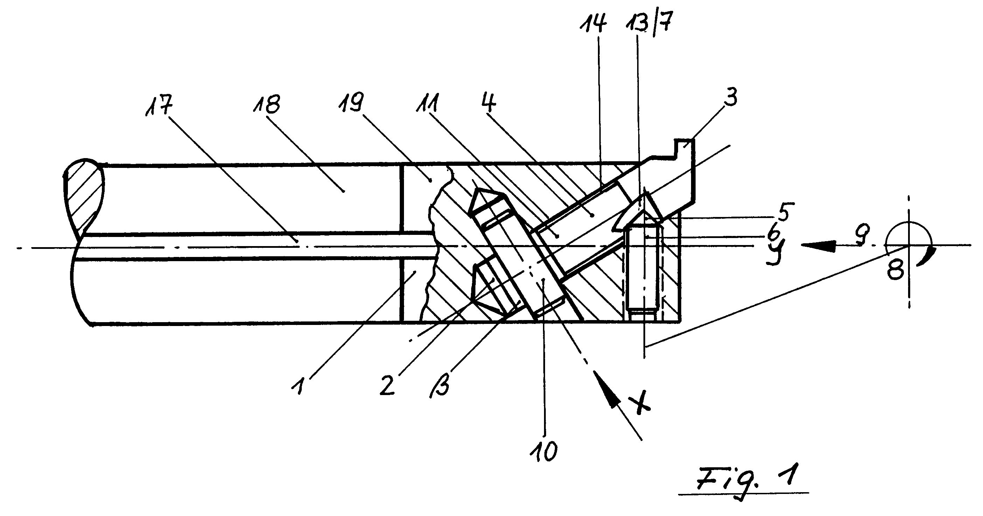

In einer Bohrstange als sogenannter Grundhalter 1 ist gemäß Fig. 1 ein zylindrischer Schneidkörper 3, 4 eingebracht und durch einen Anschlagstift 10 über eine Fixierschräge in Position gehalten. Mittels einer Klemmschraube 6 mit endseitigem Kegel 5 erfolgt, wie später noch näher ausgeführt wird, dann das Festklemmen des Schneidkörpers 3, 4 in die Aufnahmebohrung 2.

Gemäß dem Hauptanspruch ist es dabei nach der technischen Lehre der vorliegenden Erfindung von Wichtigkeit, daß als Befestigungselement 6 eine Klemmschraube dient, deren endseitiger Kegel 5 mit seiner Mantelfläche auf einer geneigten Fläche 7 am Schneidkörper 4 angreift und, unterstützt durch die Reibkraft aus der Anzugsbewegung 8 den Schneidkörper 4 über die resultierende Reibkraft 9 mitnimmt, am Anschlagstift 10 ausrichtet sowie durch Klemmung fixiert, während beim Lösen die Klemmschraube 6 den Schneidkörper 4 so weit mit nach vorne zieht, daß dieser aus der Bohrung 2 leicht herausnehmbar und damit austauschbar ist. Denkbar hierbei als Alternative wäre es zudem, daß der Anschlagstift 10 durch eine kegelförmige Stiftschraube bzw. einen balligen oder exentrischen Anschlag ersetzt ist und dadurch eine axiale Einstellung des Schneidkörpers 4 ermöglicht. Auch ist es denkbar, daß der Anschlagstift 10 durch einen einstellbaren Keil ersetzt ist und dadurch eine axiale Einstellung des Schneidkörpers zuläßt; abhängig ist dies jedoch von der jeweiligen Achslage des Schneidkörpers zur Werkzeugmitte. In spezieller baulicher Ausgestaltung ist zudem noch vorgesehen, daß der einschneidige Schneidkörper 11 am rückwärtigen Ende mit einer Fixierschräge β von 15° - 80° versehen ist, wobei die Klemmschräge 13 zur sicheren Abstützung im vorderen Bereich liegt, möglichst vor der Freinehmung 14.

Bei einer Ausgestaltung nach Fig. 2 ist hingegen vorgesehen, daß der zweischneidige Schneidkörper 15 den Spanablaufrücken 16 als Fixierschräge benützt, zwei Klemmschrägen 16 besitzt, die über Mitte liegen und der Fixierstift so angebracht ist, daß der die zweite Schneide 3 nicht beschädigt.

Weitere mögliche Details bzw. Varianten sind noch darin zu sehen, daß der Grundhalter 1 mit einer inneren Kühlmittelzufuhr 17 versehen ist und aus einem schwingungsdämpfenden Material 18 mit aufgelöteten Schneidenaufnahmeteil 19 besteht.

Auch ist es im Rahmen der vorliegenden Erfindung denkbar, daß Grundhalter 1 beidseitig mit einer Schneidenaufnahme 19 versehen und das Werkzeug außer bzw. anstatt für Radialeinstiche durch angepaßte Freiwinkel 20 am Schneidkörper 4 auch für Axialeinstiche sowie aufgrund seiner stabilen Klemmung auch für Längs- und Plandrehoperationen geeignet, bzw. als Zirkularfräswerkzeug, Aufbohr- oder Reibwerkzeug ausgebildet ist.

In jedem Falle besteht gemäß der generellen technischen Lehre der vorliegenden Erfindung das neue Werkzeug also aus einem Grundkörper mit Anschlagstift und Klemmschraube sowie mindestens einem auswechselbaren Schneidkörper. Dabei ist es möglich, die Einstechschneidkörper ein- oder zweischneidig als Fertigschneidkörper für die verschiedenen Einsticharten ( O-Ring, Hydraulikfasen, Freistiche... ) und für unterschiedlich zu bearbeitende Materialien auch aus verschiedenen Schneidstoffen anzubieten.

Als Schneidstoffe kommen hier bei HSS, Hartmetall, Cermet oder mit Keramik, CBN oder PKD bestückte Träger in Betracht. Ebenso können die Schneidkörper sog. Halbzeuge sein, aus denen der Anwender selbst die notwendige Geometrie herausarbeiten kann.

Bedingt durch die kraft- und formschlüssige Klemmung lassen sich mit diesen Einstichwerkzeugen auch Nuten auskammern und sogar Dreh- bzw. Fräsarbeiten ausführen.

## Patentansprüche

1. Werkzeug mit austauschbaren Schneidkörpern für die spanabhebende Formgebung vornehmlich in der Metallbearbeitung, z.B. als Einstechwerkzeug zum Einbringen von Einstichen in insbesondere kleine Bohrungen bzw. andere rotationssymmetrische Mantelflächen, bestehend aus einem Grundhalter (1), in dem sich mindestens eine Aufnahmebohrung (2) samt Befestigungselement (6) für den auswechselbaren Schneidkörper (4) befindet,
**dadurch gekennzeichnet,**
daß als Befestigungselement (6) eine Klemmschraube dient, deren endseitiger Kegel (5) mit seiner Mantelfläche auf einer geneigten, in Richtung der Fixierschräge (β) ansteigenden Fläche (7) am Schneidkörper (4) angreift und, unterstützt durch die an der Kontaktstelle zwischen dem endseitigen Kegel (5) und der Fläche (7) tangential wirkenden Reibkraft aus der Anzugsbewegung (8) den Schneidkörper (4) über die resultierende Kraft (9) mitnimmt, am Anschlagstift (10) ausrichtet sowie durch Klemmung fixiert.

2. Werkzeug nach Anspruch 1,
**dadurch gekennzeichnet,**
daß der Anschlagstift ( 10 ) durch eine kegelförmige Stiftschraube bzw. einen balligen oder exentrischen Anschlag ersetzt ist und dadurch eine axiale Einstellung des Schneidkörpers ( 4 ) ermöglicht.

3. Werkzeug nach Anspruch 1,
**dadurch gekennzeichnet,**
daß der Anschlagstift ( 10 ) durch einen einstellbaren Keil ( ― ) ersetzt ist und dadurch eine axiale Einstellung des Schneidkörpers zuläßt.

4. Werkzeug nach einem der vorhergehenden Ansprüche,
**dadurch gekennzeichnet,**
daß der einschneidige Schneidkörper ( 11 ) am rückwärtigen Ende mit einer Fixierschräge ( β ) von 15° - 80° versehen ist, wobei die Klemmschräge ( 13 ) zur sicheren Abstützung im vorderen Bereich liegt, möglichst vor der Freinehmung ( 14 ).

5. Werkzeug nach einem der vorhergehenden Ansprüche,
**dadurch gekennzeichnet,**
daß der zweischneidige Schneidkörper ( 15 ) den Spanablaufrücken ( 16 ) als Fixierschräge benützt, zwei Klemmschrägen ( 16 ) besitzt, die über Mitte liegen und der Fixierstift ( ) so angebracht ist, daß er die zweite Schneide ( ) nicht beschädigt.

6. Werkzeug nach einem oder mehreren der vorhergehenden Ansprüche,
**dadurch gekennzeichnet,**
daß der Grundhalter ( 1 ) mit einer inneren Kühlmittelzufuhr ( 17 ) versehen ist.

7. Werkzeug nach einem oder mehreren der vorhergehenden Ansprüche,
**dadurch gekennzeichnet,**
daß der Grundhalter ( 1 ) aus einem schwingungsdämpfenden Material ( 18 ) mit aufgelöteten Schneidenaufnahmeteil ( 19 ) besteht.

8. Werkzeug nach einem oder mehreren der vorhergehenden Ansprüche,
**dadurch gekennzeichnet,**
daß die Grundhalter ( 1 ) beidseitig mit einer Schneidenaufnahme ( ) versehen ist.

9. Werkzeug mit einer Schneidenbefestigung nach einem oder mehreren der vorhergehenden Ansprüche,
**dadurch gekennzeichnet,**
daß es als Zirkularfräswerkzeug, Aufbohr- oder Reibwerkzeug ausgebildet ist.

10. Werkzeug nach einem oder mehreren der vorhergehenden Ansprüche,
**dadurch gekennzeichnet,**
daß es außer bzw. anstatt für Radialeinstiche durch angepaßte Freiwinkel ( 20 ) am Schneidkörper ( 4 ) auch für Axialeinstiche sowie aufgrund seiner stabilen Klemmung auch für Längs- und Plandrehoperationen geeignet ist.

## Claims

1. Tool with exchangeable cutting bodies for shaping by machining principally in metal working, for example as a plunge-cutting tool for making recesses in particularly small bores or other rotationally symmetrical shell surfaces, consisting of a base holder (1), in which at least one receiving bore (2) together with fastening element (6) for the exchangeable cutting body (4) is disposed, characterised thereby that serving as fastening element (6) is a clamping screw, the cone (5) at the end of which engages by its circumferential surface on a suitable surface (7), which rises in the direction of the fixing incline ( ), at the cutting body (4) and, supported by the friction force, which acts tangentially at the contact location between the cone (5) at the end and the surface (7), from the tightening movement (8), entrains the cutting body (4) by way of the resulting force (9), aligns at the abutment pin (10) and fixes by clamping.

2. Tool according to claim 1, characterised thereby that the abutment pin (10) is replaced by a conical stud or a spherical or eccentric abutment and thereby enables an axial adjustment of the cutting body (4).

3. Tool according to claim 1, characterised thereby that the abutment pin (10) is replaced by an adjustable wedge (-) and thereby permits an axial adjustment of the cutting body.

4. Tool according to one of the preceding claims, characterised thereby that the single-edged cutting body (11) is provided at the rearward end with a fixing incline ( ) of 15° to 80°, wherein the clamping incline (13) lies in the forward region, as much as possible in front of the recess (14), for secure support

5. Tool according to one of the preceding claims, characterised thereby that the double-edged cutting body (15) utilises the swarf double incline (16) as fixing incline, possesses two clamping screws (16) which lie above the centre, and the fixing pin ( ) is so mounted that it does not damage the second cutting edge ( ).

6. Tool according to one or more of the preceding claims, characterised thereby that the base holder (1) is provided with an internal coolant feed (17).

7. Tool according to one or more of the preceding claims, characterised thereby that the base holder (1) consists of an oscillation damping material (18) with soldered-on cutter receiving part (19).

8. Tool according to one or more of the preceding claims, characterised thereby that the base holder (1) is provided at both sides with a cutter receptacle ( ).

9. Tool with a cutter mount according to one or more of the preceding claims, characterised thereby that it is constructed as a circular milling tool, a drilling tool or a reaming tool.

10. Tool according to one or more of the preceding claims, characterised thereby that it is suited additionally or alternatively for radial recess by matched free angle (20) at the cutting body (4), also for axial recesses as well as, by virtue of its stable clamping, also for facing and longitudinal turning operations.

## Revendications

1. Outil à plaquettes de coupe interchangeables pour le formage par enlèvement de copeaux, essentiellement pour le travail des métaux, par exemple comme outil à saigner pour pratiquer des saignées dans, notamment, de petits perçages, ou encore dans d'autres faces d'enveloppe à symétrie de révolution, constitué d'un élément porteur de base (1) dans lequel se trouve au moins un perçage récepteur (2) avec un élément de fixation (6) pour la plaquette de coupe interchangeable (4),
**caractérisé** en ce qu'on utilise comme élément de fixation (6) une vis de serrage dont le cône terminal (5) agit par sa face d'enveloppe sur une face inclinée (7), montante en direction du biais de fixation en position (β), de la plaquette de coupe (4) et, sous l'assistance de la force de frottement provenant du mouvement de serrage, force qui agit tangentiellement sur le point de contact entre le cône termina (5) et la face (7), entraîne avec lui la plaquette de coupe (4) au moyen de la force résultante (9), l'aligne contre la goupille de butée (10) et la fixe en position par serrage.

2. Outil selon la revendication 1, **caractérisé** en ce que la goupille de butée (10) est remplacée par un goujon fileté conique ou encore par une butée bombée ou excentrique, et permet ainsi un réglage axial de la plaquette de coupe (4).

3. Outil selon la revendication 1, **caractérisé** en ce que la goupille de butée (10) est remplacée par une clavette réglable, et autorise ainsi un réglage axial de la plaquette de coupe.

4. Outil selon l'une des revendications précédentes, **caractérisé** en ce que la plaquette de coupe (11) à un seul tranchant est pourvue à l'extrémité arrière d'un biais de fixation en position (β) de 15° à 80°, le biais de serrage (13) se situant, en vue d'un appui fiable, dans la région avant, le plus avant possible de l'évidement (14).

5. Outil selon l'une des revendications précédentes, **caractérisé** en ce que la plaquette de coupe (15) à deux tranchants utilise le dos (16) d'évacuation des copeaux comme biais de fixation en position, possède deux biais de serrage (16) qui se trouvent au milieu, et la goupille de fixation en position est disposée de telle sorte qu'elle n'endommage pas le deuxième tranchant.

6. Outil selon une ou plusieurs des revendications précédentes, **caractérisé** en ce que l'élément porteur de base (1) est pourvu d'une amenée intérieure de réfrigérant (17).

7. Outil selon une ou plusieurs des revendications précédentes, **caractérisé** en ce que l'élément porteur de base (1) est réalisé en un matériau (18) amortissant les vibrations, avec une partie réceptrice (19) de plaquette de coupe brasée sur ce matériau.

8. Outil selon une ou plusieurs des revendications précédentes, **caractérisé** en ce que l'élément porteur de base est pourvu sur les deux côtés d'un logement de plaquette de coupe.

9. Outil avec une fixation de la plaquette de coupe selon une ou plusieurs des revendications précédentes, **caractérisé** en ce qu'il est conçu comme outil de fraisage circulaire, outil d'alésage ou outil à râper.

10. Outil selon une ou plusieurs des revendications précédentes, **caractérisé** en ce qu'en plus ou au lieu de servir pour des saignées radiales, il convient également pour des saignées axiales, au moyen d'un angle de dépouille adapté (20) sur la plaquette de coupe (4), et aussi, grâce à son serrage stable, pour des opérations de cylindrage et de dressage.
